# EUROPEAN PATENT APPLICATION

(11) **EP 4 210 016 A1**
(43) Date of publication of application: **12.07.2023**
(21) Application number: 23150039.8
(22) Date of filing: 02.01.2023
(51) Int. Cl.: G08B 29/14

(54) **AUTOMATED VISUAL INSPECTION OF ALARM SYSTEM EVENT DEVICES**

(30) Priority: 10.01.2022 US 202217572071
(71) Applicant: Honeywell International Inc., Charlotte, NC 28202 (US)
(72) Inventor: RAO, Manjuprakash Rama, Charlotte, 28202 (US); MANJIYIL, Joe, Charlotte, 28202 (US); WOLF, Benjamin H., Charlotte, 28202 (US); BARSON, Michael, Charlotte, 28202 (US); DEARDEN, Christopher, Charlotte, 28202 (US)
(74) Representative: Haseltine Lake Kempner LLP

(57) **Abstract**

Devices, systems, and methods for visually inspecting event devices of a building alarm system are described herein. One mobile device includes a user interface, a display, a memory, and a processor configured to execute executable instructions stored in the memory to generate a list of event devices of an alarm system that are available for visual inspection, provide a device selection tool that allows a user to select one of the event devices from the list of event devices, and provide a visual inspection tool that provides a view of an image of the selected event device on the display.

## Description

### Technical Field

The present disclosure relates to devices, systems, and methods for initiating and monitoring automated visual inspection of alarm system event devices.

### Background

Large facilities (e.g., buildings, facilities with multiple buildings), such as commercial facilities, office buildings, hospitals, and the like, may have an alarm system that can be triggered during an emergency situation (e.g., a fire) to warn occupants to evacuate. For example, an alarm system may include a control panel (e.g., a fire control panel) within the building or facility and a plurality of event devices (e.g., hazard sensing devices, such as fire detectors, smoke detectors, carbon monoxide detectors, carbon dioxide detectors, other harmful chemical detectors, audio-visual monitoring devices, etc.) located throughout the facility (e.g., on different floors and/or in different rooms of the facility) that can sense a hazard event occurring in the facility and provide a notification of the hazard event to the occupants of the facility via alarms or other mechanisms.

Maintaining the alarm system can include regular testing of event devices. Such regular testing may be mandated by codes of practice in an attempt to ensure that the event devices are functioning properly. These regular tests may include a visual inspection component where a technician must visually inspect each device in the system. Currently, visual inspection is accomplished entirely manually. Specifically, the technician walks through the facility and visually checks each device. This is a very monotonous and time consuming task. Further, human error in verifying which device the technician is viewing can be problematic.

### Brief Description of the Drawings

Figure 1 is an example of a physical system for event device service in accordance with one or more embodiments of the present disclosure.
Figure 2 is an example of a physical and operational system for event device service in accordance with one or more embodiments of the present disclosure.
Figure 3 is an illustration of an example detection model training process in accordance with one or more embodiments of the present disclosure.
Figure 4 is an illustration of a deployment phase process in accordance with one or more embodiments of the present disclosure.
Figure 5 is an illustration of training and deployment phase process in accordance with one or more embodiments of the present disclosure.
Figure 6A is an illustration of a display provided on a user interface showing visual inspection status screen, generated in accordance with one or more embodiments of the present disclosure.
Figure 6B is another illustration of a display provided on a user interface showing visual inspection status screen, generated in accordance with one or more embodiments of the present disclosure.
Figure 6C is another illustration of a display provided on a user interface showing visual inspection status screen, generated in accordance with one or more embodiments of the present disclosure.
Figure 6D is another illustration of a display provided on a user interface showing visual inspection status screen, generated in accordance with one or more embodiments of the present disclosure.
Figure 7 is an example of a mobile device for event device maintenance, in accordance with one or more embodiments of the present disclosure.

### Detailed Description

Devices, systems, and methods for visually inspecting event devices of a building/facility alarm system are described herein. One mobile device includes a user interface, a display, a memory, and a processor. The processor configured to execute executable instructions stored in the memory to generate a list of event devices of an alarm system that are available for visual inspection, provide a device selection tool that allows a user to select one of the event devices from the list of event devices, and provide a visual inspection tool (via a visual inspection software application) that provides a view of an image of the selected event device on the display.

Traditionally, service of event devices included a first user (e.g., such as a technician, engineer, etc.) walking around the facility and visually checking the alarm system components, typically, at the same time as they carry out functional testing of event devices and other components of the alarm system. For example, carrying out smoke testing of fire sensors and visual inspection of fire sensors could be accomplished at the same time, as the inspector is close enough to visually inspect each fire sensor. While the first user is functionally testing and visually inspecting event devices, a second user may typically interpret signals received at the alarm system control panel. Such signals can be the result of the first user functionally testing event devices in the facility.

However, such a manual testing process between the second user at the control panel and the first user testing event devices in the facility may be subject to error. For instance, the first user may identify and visually inspect an event device in a space of the facility, but the device was identified by the second user incorrectly (e.g., first user was told the inspected device was 1204, when it was actually 1210). The first user has to be in continuous communication with the second user to ensure the correct event device is visually inspected, as identifying an incorrect event device can lead to errors in the visual inspection process. As will be discussed herein, embodiments of the present disclosure can provide benefits that reduce human error and/or reduce time and/or resources spent on visual inspections.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

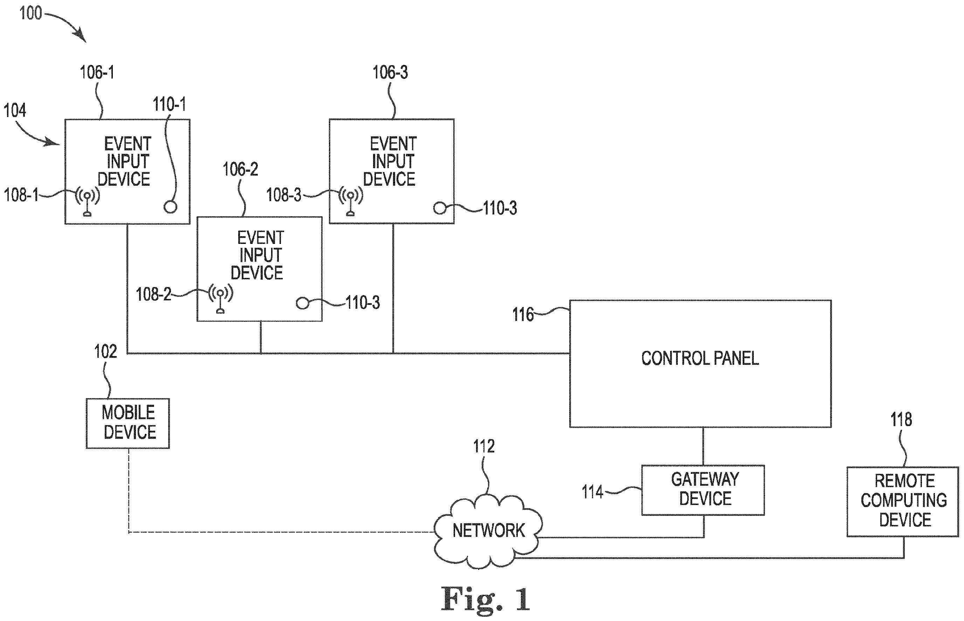

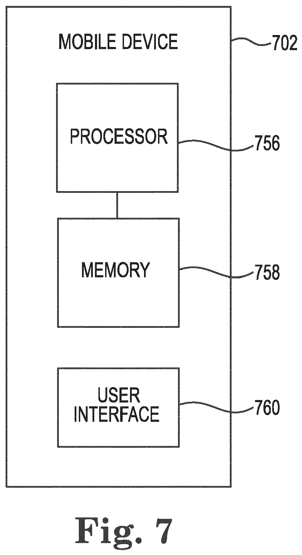

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 702 in Figure 7.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a physical system for event device service, in accordance with one or more embodiments of the present disclosure. The system 100 can include a mobile device 102, a group 104 of event devices 106-1, 106-2, 106-3, a network 112, a gateway device 114, an on-site alarm system control panel 116, and a remote computing device 118. Each of the event devices 106-1, 106-2, 106-3 can include a beacon 108-1, 108-2, 108-3, respectively, and an indicator 110-1, 110-2, 110-3, respectively, although in some systems, some devices may not include one or both.

As illustrated in Figure 1, the system 100 can include a control panel 116. As used herein, the term "control panel" refers to a device to control components of an alarm system of a facility. For example, the control panel 116 can be a fire control panel that can receive information from event devices 106-1, 106-2, 106-3 (referred to collectively herein as event devices 106) and determine whether a hazard event is occurring or has occurred.

The control panel 116 can be connected to the group 104 of event devices 106. As used herein, the term "event device" refers to a device that can receive an input relating to an event. Such an event can be, for instance, a hazard event such as a fire. For example, an event device can receive an input relating to a fire occurring in the facility. Such event devices 106 can be a part of an alarm system of the facility and can include devices such as fire sensors, smoke detectors, heat detectors, carbon monoxide (CO) detectors, or combinations of these; interfaces; pull stations; input/output modules; aspirating units; and/or audio/visual devices, such as speakers, sounders, buzzers, microphones, cameras, video displays, video screens, among other types of event devices.

These event devices 106 can be automatic, self-test devices, such as smoke detectors, heat detectors, CO detectors, and/or others. Such self-test devices can include mechanisms that generate aerosols, heat, carbon monoxide, etc. and sense these items as appropriate to the type of device being tested in the device to test the performance of the device. This can, for example, be to test the event device's thermal, chemical, and/or photo sensing capabilities.

The event devices 106-1, 106-2, 106-3 can be included in a group 104. Although the group 104 is illustrated in Figure 1 as including three event devices 106-1, 106-2, 106-3, embodiments of the current disclosure are not so limited. For example, the group 104 can include more event devices or less event devices. Additionally, the system 100 can include more than one group 104 of event devices.

Each of the event devices 106 can include a beacon 108. For example, event device 106-1 can include a beacon 108-1, event device 106-2 can include a beacon 108-2, and event device 106-3 can include a beacon 108-3. As used herein, the term "beacon" refers to a wireless device that broadcasts radio signals. For example, the beacons 108-1, 108-2, 108-3 can emit radio signals to be detected by, for example, a mobile device such as mobile device 102. The beacons 108-1, 108-2, 108-3 can be Bluetooth, Bluetooth LE (e.g., Bluetooth Smart), Bluetooth low energy (BLE), among other types of beacons.

In some examples, each of the event devices 106 can include an indicator 110. For example, event device 106-1 can include an indicator 110-1, event device 106-2 can include an indicator 110-2, and event device 106-3 can include an indicator 110-3 (referred to collectively herein as indicators 110). As used herein, the term "indicator" refers to a signaling mechanism.

In some examples, the indicators 110 can be a visual indicator. For instance, the indicator 110-1 for the event device 106-1 can be a light emitting diode (LED) that, when activated, emits visible light so that a user of the mobile device 102 can locate the event device 106-1.

In some examples, the indicator 110-1 can be an audible indicator. For instance, the indicator 110-1 for the event device 106-1 can be an audio output device (e.g., a speaker, buzzer, etc.) that, when activated emits an audible sound so that a user of the mobile device 102 can locate the event device 106-1.

The mobile device 102 can be connected to the control panel 116 via a gateway device 114. As used herein, the term "gateway device" refers to a device to provide an interface between the control panel 116 and other devices not within a local communication network (e.g., a local network where the event devices and the control panel communicate is separate from the remote network 112 that the mobile device 102 and/or remote computing device 118 communicate with the gateway device 114 and/or each other through. For example, the gateway device 114 can provide an interface for communication between the mobile device 102 and/or remote computing device and the control panel 116 and/or event devices 106.

As illustrated in Figure 1, the control panel 116 can be connected to the mobile device 102 via the gateway device 114 and a network 112. As used herein, a mobile device can include devices that are (or can be) carried and/or worn by the user. Mobile device 102 can be a phone (e.g., a smart phone), a tablet, a personal digital assistant (PDA), smart glasses, and/or a wrist-worn device (e.g., a smart watch), among other types of mobile devices.

The mobile device 102 can be connected to the gateway device 114 via the network 112. For example, the network 112 can provide for a network relationship between the mobile device 102 and the gateway device 114/control panel 116. Such a network relationship can be a wired or wireless network connection. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

As described above, in some instances the mobile device 102 may not be in communication with the control panel 116. For instance, a facility may not have a network relationship available such that the mobile device 102 is unable to be in communication with the network 112 (e.g., as illustrated by the dashed line in Figure 1). For example, a Wi-Fi connection via the network 112 may not be available for the mobile device 102 (e.g., as a result of renovation, new construction, etc.) As another example, the mobile device 102 may be located in an area of the facility having event devices 106 but may not have LTE connectivity available via the network 112 in such an area. Accordingly, the mobile device 102 can be in communication with the event devices 106 without being in communication with the network 112, as is further described herein, or through multiple networks.

The mobile device 102 can receive an inventory of the group 104 of event devices 106 from the gateway device 114. For example, prior to losing communication with the network 112, the mobile device 102 can receive, via the network 112, an inventory of the group 104 of event devices 106. The inventory can include an amount of event devices for a facility, for a space in the facility, etc. For example, the inventory received by the mobile device 102 can include the event devices 106-1, 106-2, 106-3 included in the group 104 of event devices.

When an inventory of the group 104 of event devices 106 is transmitted to the mobile device 102, the gateway device 114 can further transmit an enable signal to the group 104 of event devices 106. For example, the enable signal can be transmitted from the gateway device 114 to the control panel 116 and from the control panel 116 to each of the event devices 106. Such an enable signal can cause each event device 106-1, 106-2, 106-3 of the group 104 to enable their beacons 108-1, 108-2, 108-3, respectively. Such beacons 108 can be utilized to communicate with the mobile device 102 when the mobile device 102 is within visual range of the beacons 108, as is further described herein.

A user, such as a technician, engineer, etc., may carry mobile device 102 into different areas of the facility. For example, the user may carry the mobile device 102 into an area of the facility having the group 104 of event devices 106 in order to perform various actions that can include maintenance, commissioning, visual inspection, and/or other actions related to the event devices 106. The user can utilize the mobile device 102 to perform such actions, even when a network relationship between the mobile device 102 and the network 112 is unavailable, as is further described herein.

The mobile device 102 can generate, using the inventory, a device identification analysis for the group 104 of event devices 106. The device identification analysis for the group 104 of event devices 106 can include a list of event devices 106 included in the inventory, as is further described herein.

Such a list of event devices 106 included in the inventory can be based, for example, on the distance of the mobile device 102 to each event device 106 included in the group 104. The list based on the distance can be sorted such that the event devices 106 can be included in the list from highest signal strength to lowest signal strength. For instance, the list of event devices 106 can include the event device 106-1 listed first having the beacon 108-1 having the highest signal strength with the mobile device 102, the event device 106-2 can be listed second having the beacon 108-2 having the next highest signal strength with the mobile device 102, and the event device 106-3 can be listed third as having the beacon 108-3 having the lowest signal strength with the mobile device 102.

The user of the mobile device 102 can utilize the mobile device 102 to interact with event devices 106 of the group 104 that have communication capabilities. For example, the user of the mobile device 102 may utilize the mobile device 102 to interact with the event device 106-1 that is closest to the mobile device 102 and has hardware for transmission and/or reception of communication with the mobile device. The user can input information to the mobile device 102 to cause an event device 106 to take a service action, as is further described herein.

For example, the mobile device 102 can receive an input for the event device 106 of the group 104 that is closest to the mobile device 102 to take a maintenance action. As used herein, the term "service or maintenance action" refers to an act taken to ensure a device is kept in a specified condition, operation, or state or represents the commissioning of an event device. For example, the mobile device 102 can receive an input (e.g., a user input) for event device 106-1 (e.g., that is closest to the mobile device 102) to take a maintenance action. A visual inspection is considered a service/maintenance action as used herein.

The service action can include, for instance, modifying an address and/or a label of the event device 106 that is closest to the mobile device 102, recording inspection data about the event device that is closest to the mobile device 102, causing the event device 106 that is closest to the mobile device 102 to perform a maintenance self-test, generating a report, among other types of maintenance actions. The mobile device 102 can cause the maintenance action to be taken by the event device 106 of the group 104 that is closest to the mobile device 102 in response to the input.

Once the maintenance action is taken by the event device 106, the mobile device 102 can upload the maintenance action to a remote computing device 118. For example, upon completion of the maintenance action by event device 106-1, and upon the mobile device 102 establishing/re-establishing a network relationship via the network 112, the mobile device 102 can upload the maintenance action taken by the event device 106-1 to the remote computing device 118. For instance, the mobile device 102 may interact with the event device 106-1 to record visual inspection data about the event device 106-1 (e.g., event device 106-1 passed a visual inspection by the user of the mobile device 102), and such information can be transmitted to the remote computing device 118 via the network 112 when such a network relationship is active between the mobile device 102 and the network 112. Such uploading to the remote computing device 118 can ensure that maintenance actions taken by the event devices 106 via the mobile device 102 are properly synced in a cloud-computing environment (e.g., via remote computing device 118), especially when the mobile device 102 does not have an established network relationship via the network 112.

As described above, a user of the mobile device 102 can carry the mobile device 102 into different areas of a facility to perform various actions that can include auditing, maintenance, visual inspection, commissioning of new event devices, and/or other actions related to the event devices 106. In some instances, a user may not be able to distinguish between two closely located event devices 106 (e.g., event device 106-1 and event device 106-2). In such an instance, and when a network relationship between the mobile device 102 and the network 112 is established, the mobile device 102 can transmit an indicator signal to the gateway device 114 for the event device 106 of the group 104 that is closest to the mobile device 102.

For example, a user may have located event devices 106-1 and 106-2 in an area of the facility utilizing the mobile device 102. In response to an input, the mobile device 102 may transmit an indicator signal via the network 112 to the gateway device 114. The gateway device 114 can transmit the indicator signal to the event device 106-1 via the control panel 116.

The event device 106-1 can receive the indicator signal and emit an indicator in response to receiving the indicator signal. The user can then identify which device is device 106-1 and can provide a description via the user interface that can be stored in memory that describes, for example, where in the room or where, with respect to 106-2 or another device, device 106-1 is located. As described above, the indicator can be, for example, a visual indicator, an audible indicator, and/or a combination thereof. For instance, the event device 106-1 can activate an LED to emit a visible light (e.g., a strobe, continuous light, etc.) and/or activate an audio output device (e.g., a speaker, buzzer, etc.) to emit an audible sound. Such indicators can ensure a user of the mobile device 102 is interacting with the correct event device 106.

This embodiments of the present disclosure describe solutions to automate the process of visual inspection. In these embodiments, surveillance cameras installed within the facility and are used to capture images of the event devices and perform video analytics to determine the installation integrity of the devices. The results from the video analytics models and the functional self-testing detectors are compiled in memory and used by an inspection software application executing on a processor to provide a visual inspection confirmation functionality. To accomplish this, the commissioning phase of commissioning the alarm system would involve pairing the event devices with one or more cameras having a view of the event device and the operational phase would involve the automated visual inspection of the event devices via collection and analysis of the image data from one or more of the paired cameras.

One or more pan-tilt-zoom (PTZ) cameras may be provisioned to be able to pan, tilt, and zoom toward one or more event devices within the field of view of the camera. This can be accomplished by pairing or associating an identifier of the paired event device with PTZ parameters of the camera and configure the corresponding PTZ settings as a preset into the camera configuration. In summary a process of defining a set of presets corresponding to each unique detector in the field of view of the camera. The following sections describes various ways in which such an association can be established.

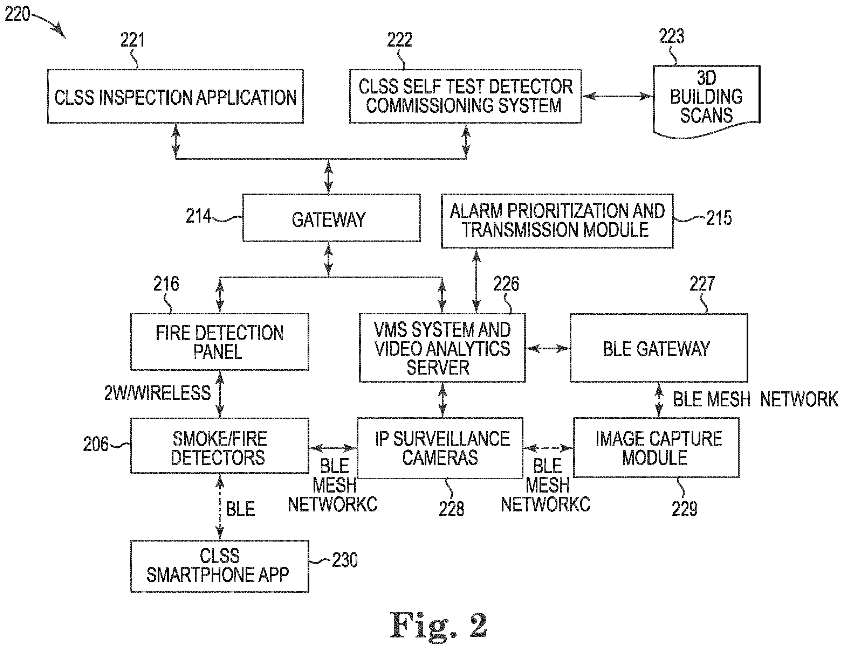

Figure 2 is an example of a physical and operational system for event device service, in accordance with one or more embodiments of the present disclosure. The system 200, illustrated in Figure 2 shows the description of the various building blocks of the system. In one of the fully automated embodiments of the present disclosure, a 3D scan 223 of a the indoor layout of a building in a facility in real world dimensions is available with the positions of the PTZ cameras and the detectors marked in the scan. This information can be accessed by an event commissioning software application 222 (e.g., for commissioning one or more self-test devices and/or other event devices within an alarm system). The information can also be accessed by an inspection software application 221 as such an application is described herein.

The pan and tilt parameters can be automatically computed for a particular camera with respect to each unique event device in the field of view of that particular camera. In some embodiments, the building or facility can be divided into a number of zones which are different areas of the building or facility. A table of zone information, the number and identifiers of PTZ cameras in the zone, unique event device identity and corresponding PTZ settings of the corresponding camera are examples of outputs of the commissioning application.

In scenarios where the 3D scans of the buildings or facilities might not be available, an automatic or self-discovery process might be used. The fire detection and camera (video) systems work co-operatively during the commissioning phase to create the association between particular cameras and one or more particular event devices within the field of view of that particular camera. To accomplish such an embodiment, a commissioning application can, for example, have a communication interface to exchange messages between the fire panel 216 and the video management system (VMS) 226 that facilitates the operation of the PTZ cameras and collection of images via the PTZ cameras to capture the image data via the cameras.

The zone information regarding the location of the cameras within the building or facility and the corresponding event devices can be preconfigured in the commissioning application based on the information received from the 3D building scans 223. When the auto discovery mode is enabled, the fire panel 216 commands only one event device at time in a particular zone to transmit its unique identity over the BLE interface 227. A unique cadence pattern can be programmed to pulse the LED on the event device, or the LED could be turned ON continuously. The LED positions are mounted in such a way that it is prominently visible from all directions. The PTZ camera 228 (sensor hub camera) starts to pan and tilt at small increments and adjusts the zoom through the entire range at small increments.

The system can be equipped with an analytics processor that is provisioned with an event device detection AI model that, when trained, can identify an event device 206 through analysis of images collected via the PTZ cameras 228. For example, a smoke detector with LED ON and a smoke detector without a LED ON are two different detection classes for event devices. At each step of PTZ movements by a camera, the video analytics model is executed and if there is a positive detection of an event device with LED ON, then the information about the event device is stored along with the event device identity locally in the camera as well as the video management system or elsewhere on the local network. The message transmitted from the camera to the VMS can contain the unique identity of the event device. The message is received in the VMS. The PTZ and the event device identity is stored locally within the camera as well as transmitted to the VMS system which stores the association. In another embodiment an alpha numeric text which corresponds to the unique event device identifier would be labeled on all 4 sides of the event device such that such that they are visible in the camera view.

At specific a P,T, and Z position video analytics can be performed for optical character recognition (OCR) detection. This may be used as alternative or in conjunction with the message communication (e.g., Bluetooth Low Energy (BLE)) and the pairing process is completed.

The commissioning application transmits a message to the fire panel to indicate the successful pairing of the event device. The fire panel then repeats the process for the rest of the event devices in the zone and when all the event devices in a zone are exhausted then the process is completed.

In another semi-automated way of commissioning (pairing process), a CLSS inspection and commissioning smartphone application 230 provided on a technician's smartphone or other mobile device can be used for the pairing process. In a zone, the application 230 takes in the camera feed from one or more cameras and can control the PTZ of the camera.

In such embodiment, the inspection and commissioning application can include a list (e.g., drop down menu) of the nearby detectors and allows the technician to select the appropriate identity of the detector corresponding to the detector on the cross hair and confirms the selection. The selection will pair the PTZ position with the event device identifier. If desired, the process can be repeated for the all the event devices in all zones.

While in some scenarios a single PTZ camera can have several detectors in its field of view, there will be limitations where closed rooms might block the view of the cameras and an alternative approach can be used as specified below. In such instances, a low power RGB and depth sensor array-based image capture module 229 can be provisioned to capture the images of the event devices and mounted close to a particular event device such the images captured could be used for further analysis. The depth sensor array may be based on Time of Flight or Lidar or structured light technologies, for example. The capture module may be powered by the event device power loop and/or battery powered with energy harvesting capability to supply the power to the on-board sensors of the module. A local communication interface can also be provisioned in the capture module. In case of a closed room, a capture module can be ceiling mounted to have a nearby detector in its field of view.

A local mesh network (e.g., BLE) is provisioned such that the PTZ camera 228, image capture module 229, event device 206, and a gateway device 227 are all nodes within that network and have unique addressable identifiers. The image capture module 229 interfaces with a gateway device 227 over local mesh network and the gateway device 227 in turn interfaces with the VMS system 226 and analytics processor, as will be discussed in more detail below.

The commissioning application can be utilized such that a pairing of data from the image capture module with the corresponding event device in the module's field of view can be accomplished.

During a visual inspection phase, a visual inspection software application can, for example, initiate the self-test process for one or more event devices. The functional tests are executed by the event devices. The automated visual inspection process may be initiated on demand basis or as per a schedule.

In one embodiment, the PTZ cameras and the image capture module can start to capture images in a zone and can execute software instructions to move to one or more preconfigured orientations. Software instructions can also stream the video feed data to an analytics server, where it can be stored for anaysis. In another embodiment, the image capture module may be commanded to capture the images.

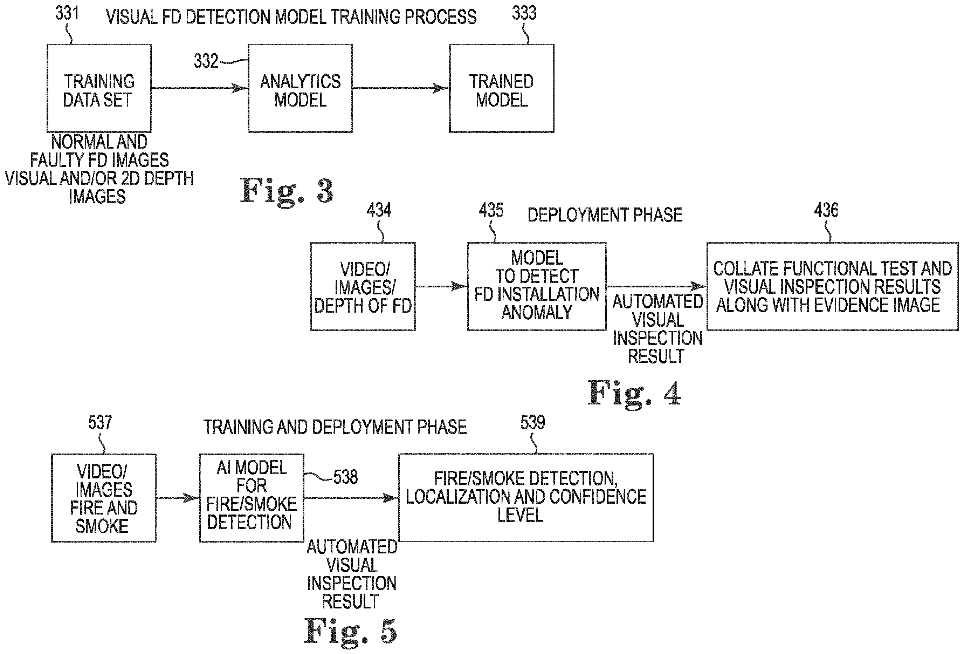

Figure 3 is an illustration of an example detection model training process in accordance with one or more embodiments of the present disclosure. Figure 4 is an illustration of a deployment phase process in accordance with one or more embodiments of the present disclosure.

Figure 3 and Figure 4 show the training and deployment phases of an Al model for the purpose of detecting the visual integrity verification of smoke detectors. The video analytics model 332 is trained on visual (RGB) images and/or depth map images as training set data 331 create a trained model 333 to detect if the event devices in the field of view are mounted intact or there are visible anomalies in the installation.

An analytics model might, for example, be deployed on the camera or on the image capture model or in an analytics server. The result of the automated visual inspection and the functional self-testing of the corresponding event device is recorded in the system and a report can be generated (e.g., a compliance report confirming all event devices were visually inspected). In such a case, using depth information an additional step of transformation of depth images to a visible image is performed and evidence images are collected and reported.

The data provided by the inspection application or commissioning application can be presented in a report that can include such things as the status of visual inspections for a number of devices, anomalies in the data, event devices inspection issues, remedies implemented to resolve such issues, functional device test status and/or results, and/or other useful data. This can be provided as a printed report or an electronic report and can be provided on the mobile device and/or be delivered to a remote device where it could be accessible by a building owner or administrator, supervisor of the alarm system, or other person or entity needing such information.

With respect to Figure 4, the deployment can include collection of image data at 434, use of an analytics software application or routine within a software application to detect an event device installation issue (as will be described in more detail below), collating (e.g., using the visual inspection application and commissioning application) the functional testing and visual testing results at 436. For example, in some embodiments, Open Network Video Interface Forum (ONVIF) extensions may be used to convey visual inspection specific events and results from a PTZ camera to a VMS, so at any future point in time it would be possible to filter the events and gather the automated visual inspection results.

In another embodiment a visual inspection smartphone application may be provisioned with an image capture module and an indoor positioning (location) application with navigation map to be able to navigate to all event devices. Facility management personnel might be trained to navigate to the event device location and capture still or video image data of the event devices and upload the data to the inspection server along with the location information for the event device captured within the image data. This process may be triggered, for example, based on the schedule of the visual inspection requirements or timed around the self-test detection inspection schedule.

The benefit of this approach is it would enable a fully automated self-test process including access to visual still images and video footages and potentially avoids a service technician visit to the facility. A software module, such as within the commissioning software correlates the location information with event device identity and collates the visual images (e.g., providing evidence of the orientation of the event device and its condition) along with functional results of self-test results which may be inspected remotely, and an inspection report can be prepared.

The co-operative peer to peer operation of IP cameras including PTZ cameras and event devices in a zone may also be leveraged for alarm verification purposes. For example, the alarm system commissioning application may be used to map one or more event device in a zone to one or more cameras which have these event devices in the respective field of view. Such an association may be done in an automated process as described earlier or a manual process. In the case of a PTZ camera, for example, a set of presets may be programmed corresponding to each event device in its field of view. In such an embodiment, there can be a table created to define the definition of the mapping of event devices relative to one or more cameras including the presets for PTZ cameras and provisioned in the VMS. In this manner, the event devices within the field of view of a particular camera can be easily located and visually inspected.

When a smoke or a fire alarm is reported at the fire panel, the fire panel communicates a message which contains the event device identification and location information to the VMS. The VMS initiates a video verification process where in the video feeds from the fixed cameras are forwarded to an analytics server for automated visual verification of presence of smoke and fire events. If the camera is a PTZ camera, they may then perform the PTZ functionality. The video feed for each camera preset setting is forwarded to the video analytics server.

Figure 5 is an illustration of training and deployment phase process in accordance with one or more embodiments of the present disclosure. Figure 5 shows the training and deployment phase of an AI model which has been trained to detect smoke and fire events from video feeds 537. The analytics server executes a fire/smoke detection algorithm 538 and outputs a detection output 539 which includes a presence of smoke or fire, the location in the video frame or still image and the confidence level of the detection of smoke or fire.

The information is transmitted to an alarm prioritization and transmission module (e.g., 225 of Figure 2) where in a set of rules are executed either to raise or lower the priority of the alarm or transmit the alarm information to an alarm monitoring center or other agencies. In this manner, the video system used for visual inspection and/or commissioning can also be used for fire/smoke detection analysis and event device status during determination of an alarm event.

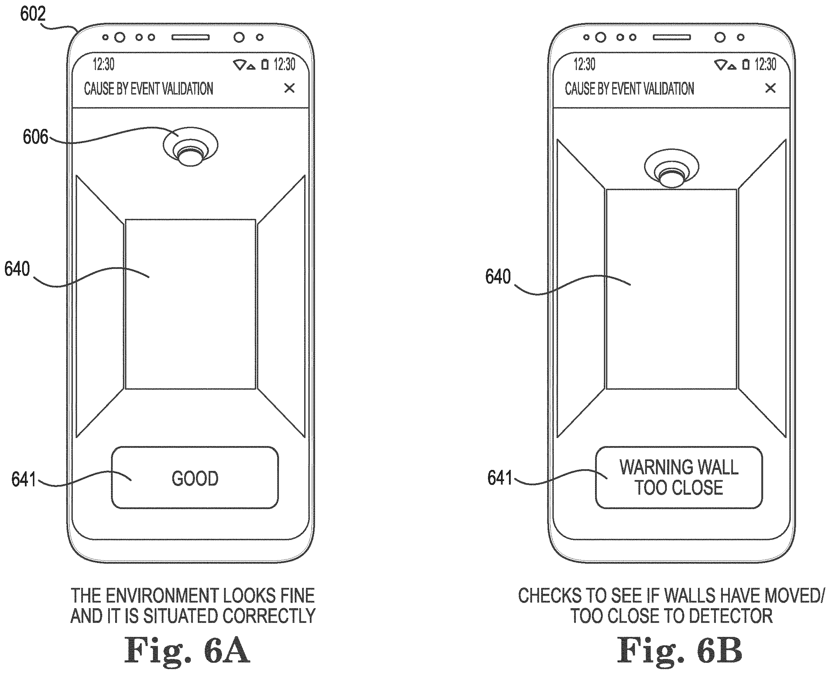

Figure 6A is an illustration of a display provided on a user interface showing visual inspection status screen, generated in accordance with one or more embodiments of the present disclosure. In some embodiments, during the visual inspection and/or commissioning processes used by the system, the technician using the mobile device can see one or more views of a particular event device from a camera located nearby.

For example, the processor in the mobile device can be configured to execute the instructions to provide a database of images associated with the event devices, provide an association between the images and the event devices, and provide via the visual inspection tool a view of the relevant image associated with the selected event device on the display. In this manner, when an event device is selected by the user, the processor can display an associated image of the selected device to the user to view. From this image, the user can make a visual inspection on the event device without physically traveling to within visual view of the event device.

Additionally or alternatively, the mobile device can display a device status that can be based on the visual inspection application's analysis of the images of the event device received from the one or more cameras. For example, via machine learning, the visual inspection application can learn when a visual inspection is satisfactory or whether one or more conditions exist that render the visual inspection unsatisfactory. These conditions can be provided by the inspection company, the owner of the facility, and/or based on local or federal code provisions, or other suitable conditions that may be provided to the visual inspection application.

As shown in Figure 6A mobile device 602 includes an image received from a camera in close proximity to a particular event device 606 that is in the camera's field of view. The image also includes objects 640 around the event device. Here, the objects are a number of walls, but objects can be anything that is within the field of view that is not the event device. The visual inspection application has analyzed the image data it has received from the one or cameras having the particular event device 606 in their field of view and determined that event device appears visually to be in operational order and, accordingly, is displayed an indicator 641 that the visual inspection is satisfactory.

Figure 6B is another illustration of a display provided on a user interface showing visual inspection status screen, generated in accordance with one or more embodiments of the present disclosure. In this illustration, the visual inspection application has checked to see if any objects are too close to the event device and determined that an object (i.e., the back wall 640) is too close to the event device. Such positioning may, for example, result in inaccurate event device sensing or false alarms.

In a commissioning process, this may have occurred during installation of the event device or walls and may need to be rectified before the commissioning process can be completed. Such an instance may also occur where construction work has happened between inspections and the wall was moved, but the event device was not. In both cases, the indicator 641 can indicate that the status of the event device is unsatisfactory and, in some embodiments, the reason for such a determination (e.g., Warning Wall Too Close). The technician can then remedy this issue and update the visual inspection application through user input by the technician to the application or resubmit images (e.g., from the cameras that took the original images or from a camera used by the technician). Through these inputs, the visual inspection status of the event device can be reevaluated and/or updated as satisfactory.

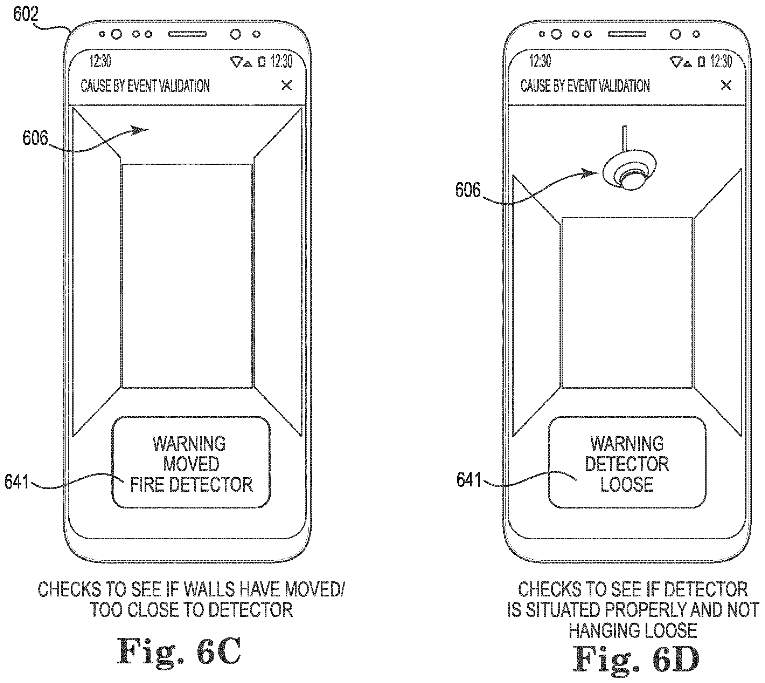

Figure 6C is another illustration of a display provided on a user interface showing visual inspection status screen, generated in accordance with one or more embodiments of the present disclosure. In the example of Figure 6C, the event device 606 has been moved out of the field of view of the camera or objects (e.g., a wall) have been moved to obstruct the view of the event device. Here, the fire detector (FD) event device has been moved as indicated by the indicator 641. As in the above case, the technician can then remedy this issue and update the visual inspection application through user input by the technician to the application or resubmit images (e.g., from the cameras that took the original images or from a camera used by the technician) to have the status updated or reevaluated.

Figure 6D is another illustration of a display provided on a user interface showing visual inspection status screen, generated in accordance with one or more embodiments of the present disclosure. In this illustrated case, there is a visible problem with the event device. Here, the event device is not properly installed and is not mounted to the ceiling correctly. This condition can be provided to the technician at 641 and the technician can then address this issue or schedule a return visit to resolve it.

Figure 7 is an example of a mobile device for event device maintenance including visual inspection and/or alarm system commissioning, in accordance with one or more embodiments of the present disclosure. As illustrated in Figure 7, the mobile device 702 can include a memory 738 and a processor 736 for event device maintenance in accordance with the present disclosure.

The memory 738 can be any type of storage medium that can be accessed by the processor 736 to perform various examples of the present disclosure. For example, the memory 738 can be a non-transitory computer readable medium having computer readable instructions (e.g., executable instructions/computer program instructions) stored thereon that are executable by the processor 736 for event device maintenance in accordance with the present disclosure. The computer readable instructions can be executable by the processor 736 to provide visual inspection through use of surveillance cameras located with their field of view of a particular event device to be visually inspected.

The memory 738 can be volatile or nonvolatile memory. The memory 738 can also be removable (e.g., portable) memory, or non-removable (e.g., internal) memory. For example, the memory 738 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 738 is illustrated as being located within mobile device 702, embodiments of the present disclosure are not so limited. For example, memory 738 can also be located internal to another computing resource (e.g., enabling computer readable instructions to be downloaded over the Internet or another wired or wireless connection).

As illustrated in Figure 7, mobile device 02 includes a user interface 740. For example, the user interface 740 can display a device identification analysis (e.g., as previously described in connection with Figures 1-6D) in a single integrated display.

A user (e.g., operator) of mobile device 702 can interact with mobile device 702 via user interface 740. For example, user interface 740 can provide (e.g., display and/or present) information to the user of mobile device 702, and/or receive information from (e.g., input by) the user of mobile device 702. For instance, in some embodiments, user interface 740 can be a graphical user interface (GUI) that can provide and/or receive information to and/or from the user of mobile device 702. The display can be, for instance, a touch-screen (e.g., the GUI can include touch-screen capabilities). Alternatively, a display can include a television, computer monitor, mobile device screen, other type of display device, or any combination thereof, connected to mobile device 702 and configured to receive a video signal output from the mobile device 702.

As an additional example, user interface 740 can include a keyboard and/or mouse the user can use to input information into mobile device 702. Embodiments of the present disclosure, however, are not limited to a particular type(s) of user interface.

As discussed herein, the embodiments of the present disclosure can be beneficial in providing satisfactory visual inspection. Such embodiments can reduce technician time and the number of skilled technicians of site, among other benefits.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A mobile device (102) for visually inspecting event devices (106) of a building alarm system (100), comprising:
a user interface;
a display;
a memory; and
a processor configured to execute executable instructions stored in the memory to:
generate a list of event devices (106) of an alarm system (100) that are available for visual inspection;
provide a device selection tool that allows a user to select one of the event devices (106) from the list of event devices; and
provide a visual inspection tool that provides a view of an image of the selected event device (106) on the display.

2. The mobile device (102) of claim 1, wherein the processor is configured to execute the instructions to provide a status indicator of the selected event device (106) on the display.

3. The mobile device (102) of claim 1, wherein the processor is configured to execute the instructions to enable outputs of the selected number of event devices (106).

4. The mobile device (102) of claim 1, wherein the processor is configured to execute the instructions to:
a status indication message that indicates the type of status issues occurring at the selected event device (106).

5. The mobile device (102) of claim 1, wherein mobile device (102) includes a user input that allows a user to input an update to the status indication message.

6. The mobile device (102) of claim 1, wherein the processor is configured to execute the instructions to:
provide a database of images associated with the event devices (106);
provide an association between the images and the event devices (106); and
provide via the visual inspection tool a view of the relevant image associated with the selected event device (106) on the display.

7. The mobile device (102) of claim 1, wherein the mobile device (102) includes a processor that is configured to execute the instructions to receive the image from a camera located such that the selected event device (106) is in the field of view of the camera.

8. The mobile device (102) of claim 1, wherein the status indicator is presented by a text indicator.

9. A system for visually inspecting event devices (106) of a building alarm system (100), comprising:
a number of event devices (106);
a number of cameras wherein at least one camera has a particular event device (106) in its field of view;
a control panel (116) to control the operation of the number of event devices; and
mobile device (102) for visually inspecting event devices (106) of an alarm system (100), comprising:
a user interface;
a memory; and
a processor configured to execute executable instructions stored in the memory to:
generate a list of event devices (106) of an alarm system (100) that are available for visual inspection;
provide a device selection tool that allows a user to select one of the event devices (106) from the list of event devices, wherein the selected event device (106) is the particular event device; and
provide a visual inspection tool that provides a view of an image of the selected event device (106) on the display.

10. The system of claim 9, wherein the each event device (106) is within the field of view of at least one camera.

11. The system of claim 9, wherein the image displayed is received from the camera.

12. The system of claim 9, wherein the visual inspection tool is part of an alarm system commissioning software application that tracks the satisfactory status of all event devices (106) of the alarm system.

13. The system of claim 12, wherein the alarm system commissioning application also tracks the status of at least one functional tests of each event device (106).

14. The system of claim 13, wherein the alarm system (100) provides a satisfactory status of the selected event device (106) when both the visual inspection for the selected event device (106) is satisfactory and the functional test of the selected event device (106) is satisfactory.

15. The system of claim 13, wherein the event devices (106) are included in the list from highest signal strength to lowest signal strength.
